# EUROPÄISCHE PATENTSCHRIFT

(11) **EP 1 363 014 B1**
(45) Veröffentlichungstag und Bekanntmachung des Hinweises auf die Patenterteilung: **03.01.2007**
(21) Anmeldenummer: 03450118.9
(22) Anmeldetag: 15.05.2003
(51) Int. Cl.: F02M 31/06, F02B 1/12, F01N 3/28, F02D 13/02

(54) **Verfahren zum Betreiben einer Brennkraftmaschine**
Method for operating an internal combustion engine
Méthode d'opération d'un moteur à combustion interne

(30) Priorität: 17.05.2002 AT 3192002 U
(43) Veröffentlichungstag der Anmeldung: 19.11.2003
(73) Patentinhaber: AVL List GmbH, 8020 Graz (AT)
(72) Erfinder: Fürhapter, Alois, Dipl.-Ing., 8020 Graz (AT)
(74) Vertreter: Babeluk, Michael

(56) Entgegenhaltungen:
- EP-A- 1 048 833
- EP-A- 1 096 118
- DE-A- 10 124 941

## Beschreibung

Die Erfindung betrifft ein Verfahren zum Betreiben einer Brennkraftmaschine, welche zumindest einen Betriebsmodus aufweist, in welchem die Verbrennung im Wesentlichen durch Selbstzündung eines selbstzündbaren homogenen Kraftstoff-Luftgemisches, insbesondere eines Benzin-Luftgemisches erfolgt, wobei die Temperatur im Brennraum durch Restgasrückführung eingestellt wird.

Die wichtigsten Bestimmungsstücke für den Verbrennungsablauf in einer Brennkraftmaschine mit innerer Verbrennung sind die Phasenlage des Verbrennungsablaufes beziehungsweise des Verbrennungsbeginnes, die maximale Anstiegsgeschwindigkeit des Zylinderdruckes, sowie der Spitzendruckpunkt.

Bei einer Brennkraftmaschine, bei der die Verbrennung im Wesentlichen durch Selbstzündung eines selbstzündbaren homogenen Kraftstoff-Luftgemisches erfolgt, werden diese Bestimmungsstücke durch die Steuerung der Ladungszusammensetzung und des Ladungstemperaturverlaufes festgelegt. Diese beiden Größen werden ihrerseits durch eine große Anzahl von Einflussgrößen bestimmt, wie z.B. Drehzahl, Kraftstoffmenge, Ansaugtemperatur, Ladedruck, effektives Kompressionsverhältnis, Inertgasgehalt der Zylinderladung und Bauteiltemperatur.

Es zeigt sich, dass der Ladungstemperatur eine besonders wichtige Rolle für die Steuerung der Geschwindigkeit der während der Zündverzugsphase und der Verbrennung selbst ablaufenden chemischen Vorgänge zukommt. Ein sehr wirksames Mittel zur Erhöhung der Ladungstemperatur ist die Erhöhung des Restgasgehaltes, das heißt die Erhöhung des Gehaltes an nicht ausgespültem bzw. zurückgesaugtem Abgas des vorhergehenden Verbrennungszyklus in der Zylinderladung für den nächsten Zyklus.

Aus der AT 005140 U1 ist ein Verfahren zum Betreiben einer mit einem selbstzündbaren, homogenen Kraftstoff-Luftgemisch betriebenen Brennkraftmaschine, bei der der Ladungstemperaturverlauf durch Steuerung des Restgasgehaltes im Brennraum eingestellt wird, bekannt.

In der AT 003135 U1 wird eine Brennkraftmaschine beschrieben, welche zumindest in einem Betriebsmodus ein homogenes Kraftstoff-Luftgemisch durch Selbstzündung eines sowohl fremd- als auch selbstzündbaren Kraftstoffes, insbesondere Benzin, verbrennt. Dadurch kann im Teillastbereich ein besonders emissionsgünstiger Betrieb erreicht werden. Um die Menge des Restgases im Sinne einer inneren Abgasrückführung zur Anhebung der Ladungstemperatur im Teillastbereich steuern zu können, wird durch eine variable Ventilsteuerungseinrichtung der Schließzeitpunkt zumindest eines Auslassventils in Abhängigkeit von Motorbetriebsparametern verändert.

Es hat sich aber gezeigt, dass ohne zusätzliche Maßnahmen die für eine sichere Selbstzündung von Benzin erforderlichen Brennraumtemperaturen nur schwer erreicht werden können.

Brennkraftmaschinen mit motornah eingesetzten Katalysatoren sind aus den Veröffentlichungen DE 36 01 703 A1, DE 40 38 169 C2 und DE 43 22 526 C2 bekannt. Die motornahe Anordnung der Katalysatoren bewirkt, dass dieser auf einem für seinen ordnungsgemäßen Betrieb erforderlichen Temperaturniveau gehalten werden kann. Eine Temperaturanhebung der Ladung im Brennraum durch Restgasrückführung durch den Katalysator ist nicht vorgesehen.

Die JP 2000-320360 A offenbart eine Abgasemissionssteuereinrichtung für eine Brennkraftmaschine mit einem NO_{X}-Katalysator im Abgasstrang, wobei stromabwärts des Katalysators eine Abgasrückführleitung zum Einlasssystem abzweigt.

Die EP 1 063 427 A2 beschreibt eine Brennkraftmaschine mit einem Betriebsbereich mit Selbstzündung eines homogenen Kraftstoff-Luftgemisches, welche einen Katalysator im Abgasstrang aufweist. Stromaufwärts des Katalysators zweigt eine Abgasrückführleitung zum Einlasssystem ab.

Die EP 0 943 793 A2 offenbart eine Brennkraftmaschine mit direkter Einspritzung und Funkenzündung eines geschichteten Kraftstoff-Luftgemisches innerhalb eines homogenen mageren Grundgemisches im Brennraum. Stromaufwärts eines Katalysators im Abgasstrang zweigt eine zum Einlasssystem führende Abgasrückführleitung ab. Eine ähnliche Brennkraftmaschine ist auch aus der US 6,116.208 A bekannt.

Weiters offenbart die EP 1 096 118 A1 eine Viertakt-Brennkraftmaschine mit Selbstzündung, wobei pro Zylinder eine Abgasrückführleitung zwischen Auslassstrang und Einlassstrang vorgesehen ist. In der Abgasrückführleitung ist ein Katalysator angeordnet, über welchen rückgeführte Abgase geleitet werden.

Aufgabe der Erfindung ist es, auf möglichst einfache Weise bei einer homogen selbstgezündet betreibbaren Brennkraftmaschine eine sichere Selbstzündung eines selbstzündbaren homogenen Kraftstoff-Luftgemisches, insbesondere eines Benzin-Luftgemisches zu gewährleisten.

Erfindungsgemäß wird dies dadurch erreicht, dass die Restgase durch zumindest einen motornah im Auslasskanal angeordneten Katalysator rückgeführt werden und dass die Abgase durch den Katalysator sowohl während der Ausschiebephase, als auch während der Restgasrückführphase geleitet werden, wobei die Abgase den Katalysator während der Ausschiebphase in Ausströmrichtung und während der Restgasrückführphase entgegen der Ausströmrichtung durchströmen. Durch die katalytische Umsetzung der unverbrannten Kohlenwasserstoffe im Abgas wird in einer exothermen Reaktion die Temperatur des Restgases erhöht bevor dieses in den Brennraum zurückgesaugt wird. Die unverbrannten Kohlenwasserstoffe im Abgas werden somit katalytisch umgesetzt, bevor das Abgas wieder zurückgesaugt wird.

Um das erfindungsgemäße Verfahren zu realisieren, ist in den Flansch des Abgaskrümmers für jeden Zylinder ein Metallträger-Katalysator so eingeschweißt, dass dieser in den Auslasskanal zylinderkopfseitig bis vor die Auslassventile hineinragt. Alternativ dazu kann vorgesehen sein, dass der Katalysator in den Auslasskanal integriert ist. Somit ist garantiert, dass eine möglichst große Menge des Abgases während der Ausschiebphase durch diesen Katalysator geschoben wird, und bei der darauffolgenden Ansaugphase wieder durch diesen zurückgesaugt wird. Das so erzeugte interne Restgas ist heißer, da die unverbrannten Teile während dem Hin- und Herschieben in Wärme umgesetzt werden. Die Temperaturerhöhung ist dabei umso stärker, je mehr Abgas zurückgesaugt wird und je mehr unverbrannte Kohlenwasserstoffe in ihm enthalten sind.

Ein weiterer Vorteil besteht darin, dass durch die extrem nahe Lage des Katalysators zum Zylinder ein rasches Aufwärmen erreicht werden kann, und somit auch die Warmlaufphase verkürzt werden kann.

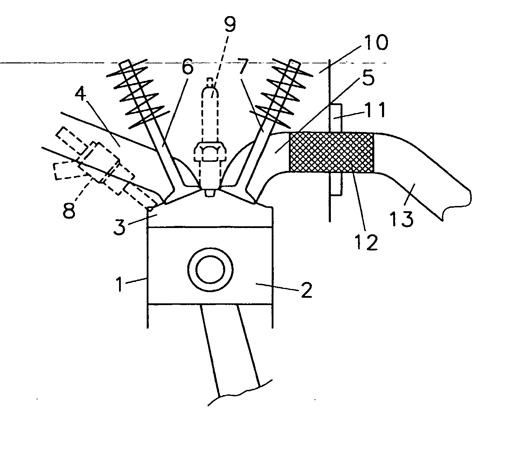

Die Erfindung wird im Folgenden anhand der Figur näher erläutert.

Die Figur zeigt schematisch einen Zylinder 1 einer Brennkraftmaschine im Schnitt mit einem hin- und hergehenden Kolben 2 und einem Brennraum 3, in welchen zumindest ein Einlasskanal 4 einmündet und von welchem mindestens ein Auslasskanal 5 ausgeht. Der Einlasskanal 4 wird über mindestens ein Einlassventil 6, der Auslasskanal 5 über mindestens ein Auslassventil 7 gesteuert. Zur direkten Kraftstoffeinspritzung in den Brennraum 3 ist ein Einspritzventil 8 vorgesehen.

Die Brennkraftmaschine wird beispielsweise zumindest bei Teillast nach dem HCCI-Verfahren (Homogenous Charge Compression Ignition) betrieben. Dabei wird ein homogenes Kraftstoff-Luftgemisch im Brennraum 3 selbstgezündet, wobei der Zündungszeitpunkt durch Beeinflussung der Ladungstemperatur geregelt wird. Das homogene Kraftstoff-Luftgemisch kann entweder durch Gemischansaugung durch den Ansaugkanal, beispielsweise durch indirekte Kraftstoffeinspritzung in den Ansaugkanal 4, oder bei direkter Einspritzung über das Einspritzventil 8 durch einen entsprechend früh angesetzten Einspritzzeitpunkt in den Brennraum 3 realisiert werden.

Mit 9 ist eine optional vorgesehene Zündkerze bezeichnet. Diese wird eingesetzt, wenn die Brennkraftmaschine in bestimmten Betriebsbereichen, beispielsweise bei Volllast oder bei Kaltstart, fremdgezündet betrieben wird.

Zur Beeinflussung der Ladungstemperatur im Brennraum 3 weist die Brennkraftmaschine eine nicht weiter dargestellte Restgasrückführeinrichtung auf, welche durch Beeinflussung der Steuerzeiten des Auslassventils 7 bewirkt, dass Restgas in der Einlassphase aus dem Auslasskanal 5 in den Brennraum 3 zurückgesaugt wird.

Um eine ausreichende Ladungstemperatur im Brennraum 3 erreichen zu können, ist ein motornah angeordneter Katalysator 12 im Auslasskanal 5 des Zylinderkopfes 10 vorgesehen. Dazu ist in den Flansch 11 des Abgaskrümmers 13 für jeden Zylinder 1 ein Metallträger-Katalysator so eingeschweißt, dass dieser in den Auslasskanal 5 zylinderkopfseitig bis vor das Auslassventil 7 hineinragt. Somit ist garantiert, dass eine möglichst große Menge des Abgases während der Ausschiebephase durch diesen Katalysator 12 geschoben wird und bei der darauffolgenden Ansaugphase wieder durch diesen zurückgesaugt wird. Das so erzeugte interne Restgas ist heißer, da die unverbrannten Teile währen dem Hin- und Herschieben in Wärme umgesetzt werden.

Alternativ dazu kann der Katalysator 12 in den Auslasskanal 5 auf der Seite des Zylinderkopfes 10 integriert sein.

## Patentansprüche

1. Verfahren zum Betreiben einer Brennkraftmaschine, welche zumindest einen Betriebsmodus aufweist, in welchem die Verbrennung im Wesentlichen durch Selbstzündung eines selbstzündbaren homogenen Kraftstoff-Luftgemisches, insbesondere eines Benzin-Luftgemisches erfolgt, wobei die Temperatur im Brennraum (3) durch Restgasrückführung eingestellt wird, wobei die Restgase durch zumindest einen motornah im Auslasskanal (5) angeordneten Katalysator (12) rückgeführt werden, **dadurch gekennzeichnet dass** die Abgase durch den Katalysator sowohl während der Ausschiebephase, als auch während der Restgasrückführphase geleitet werden, wobei die Abgase den Katalysator (12) während der Ausschiebphase in Ausströmrichtung und während der Restgasrückführphase entgegen der Ausströmrichtung durchströmen.

2. Brennkraftmaschine, welche zumindest einen Betriebsmodus aufweist, in welchem die Verbrennung im Wesentlichen durch Selbstzündung eines selbstzündbaren homogenen Kraftstoff-Luftgemisches, insbesondere eines Benzin-Luftgemisches erfolgt, mit einer Einrichtung zur Restgasrückführung und mit zumindest einem Katalysator im Abgasstrang, wobei in zumindest einem mit dem Brennraum eines Zylinders (1) strömungsverbindbaren Auslasskanal (5) eines Zylinderkopfes (10) und/oder in einem an den Auslasskanal (5) anschließenden Abgaskrümmers (13) zumindest ein Katalysator (12) so motornah angeordnet ist, dass die Restgase durch den Katalysator (12) rückgeführt werden **dadurch gekennzeichnet, dass** die Abgase durch den Katalysator sowohl während der Ausschiebephase, als auch während der Restgasrückführphase geleitet werden, wobei die Abgase den Katalysator (12) während der Ausschiebphase in Ausströmrichtung und während der Restgasrückführphase entgegen der Ausströmrichtung durchströmen.

3. Brennkraftmaschine nach Anspruch 2, **dadurch gekennzeichnet, dass** der Katalysator (12) zwischen Auslassventil (7) und Abgaskrümmer (13) angeordnet ist.

4. Brennkraftmaschine nach Anspruch 2 oder 3, **dadurch gekennzeichnet, dass** in einem am Zylinderkopf (10) befestigbaren Flansch (11) des Abgaskrümmers (13) ein Metallträger-Katalysator (12) eingeschweißt ist, welcher vorzugsweise in den Auslasskanal hineinragt.

5. Brennkraftmaschine nach Anspruch 2 oder 3, **dadurch gekennzeichnet, dass** der Katalysator (12) in den Auslasskanal (5) integriert ist.

## Claims

1. A method of operating an internal combustion engine having at least one mode of operation in which combustion substantially relies on autoignition of a compression ignitable homogeneous fuel/air mixture, more specifically of a gas/air mixture, the temperature in the combustion chamber (3) being controlled by exhaust gas recirculation, the residual gases being recirculated through at least one catalyst (12) disposed in the exhaust manifold (5) in proximity to the engine, **characterized in that** the exhaust gases are led through the catalyst both during the exhaust period and during exhaust gas recirculation, the exhaust gases flowing through the catalyst (12) in a direction which is directed toward the outlet during the exhaust period and in an opposite direction during recirculation of the exhaust.

2. An internal combustion engine having at least one mode of operation in which combustion substantially relies on autoignition of a compression ignitable homogeneous fuel/air mixture, more specifically of a gas/air mixture, with an apparatus for recirculating the residual exhaust gases and with at least one catalyst in the exhaust flow, at least one catalyst (12) being disposed in at least one exhaust manifold (5) of a cylinder head (10) which may be in flow connection with the combustion chamber of one cylinder (1) and/or in an exhaust elbow (13) connected to the exhaust manifold (5) so close in proximity to the engine that the residual gases are recirculated through the catalyst (12), **characterized in that** the exhaust gases are led through the catalyst both during the exhaust period and during exhaust gas recirculation, the exhaust gases flowing through the catalyst (12) in a direction which is directed toward the outlet during the exhaust period and in an opposite direction during recirculation of the exhaust.

3. The internal combustion engine according to claim 2, **characterized in that** the catalyst (12) is disposed between the exhaust valve (7) and the exhaust elbow (13).

4. The internal combustion engine according to claim 2 or 3, **characterized in that** a metal carrier catalyst (12) is welded in a flange (11) of the exhaust elbow (13) which is fastenable to the cylinder head (10), said metal carrier catalyst preferably projecting into the exhaust manifold.

5. The internal combustion engine according to claim 2 or 3, **characterized in that** the catalyst (12) is incorporated in the exhaust manifold (5).

## Revendications

1. Procédé de gestion d'un moteur à combustion interne ayant au moins un mode de fonctionnement selon lequel la combustion se fait principalement par auto-allumage d'un mélange carburant/air homogène, auto-inflammable, notamment d'un mélange air/essence,
la température dans la chambre de combustion (3) se réglant par le recyclage des gaz résiduels retournant à travers au moins un catalyseur (12) installé dans le canal d'échappement (5),
**caractérisé en ce que**
les gaz d'échappement sont dirigés à travers le catalyseur à la fois pendant la phase d'expulsion et aussi pendant la phase de leur recyclage, et
les gaz d'échappement traversent le catalyseur (12) pendant la phase d'expulsion dans la direction d'expulsion, et pendant la phase de recyclage des gaz résiduels dans la direction opposée à la direction d'expulsion.

2. Moteur à combustion interne ayant au moins un mode de fonctionnement selon lequel la combustion se fait principalement par auto-allumage d'un mélange carburant/air homogène auto-inflammable notamment d'un mélange essence/air, comportant une installation pour recycler les gaz résiduels et au moins un catalyseur dans la conduite des gaz d'échappement, avec au moins un catalyseur (12) à proximité du moteur,
dans au moins un canal d'échappement (5) communiquant avec la chambre de combustion d'un cylindre dans la culasse (10) et/ou dans un coude de gaz d'échappement (13) relié au canal de sortie (5),
les gaz résiduels étant recyclés à travers le catalyseur (12),
**caractérisé en ce que**
les gaz d'échappement sont conduits à travers le catalyseur à la fois pendant la phase d'expulsion et pendant leur phase de recyclage,
les gaz d'échappement traversent le catalyseur (12) pendant la phase d'expulsion dans la direction d'expulsion et pendant la phase de recyclage dans la direction opposée à la direction d'expulsion.

3. Moteur à combustion interne selon la revendication 2,
**caractérisé en ce que**
le catalyseur (12) est installé entre la soupape d'échappement (7) et le coude d'échappement (13) .

4. Moteur à combustion interne selon les revendications 2 ou 3,
**caractérisé en ce qu'**
une bride (11) du coude d'échappement (13) fixée à la culasse (10) comporte un catalyseur support de métal (12), soudé, qui pénètre de préférence dans le canal d'échappement.

5. Moteur à combustion interne selon la revendication 2 ou la revendication 3,
**caractérisé en ce que**
le catalyseur (12) est intégré dans le canal d'échappement (5).
